## Europäisches Patentamt
## European Patent Office
## Office européen des brevets

(11) Veröffentlichungsnummer: **0 012 363**
**B1**

(12) **EUROPÄISCHE PATENTSCHRIFT**

(45) Veröffentlichungstag der Patentschrift:
04.11.81

(21) Anmeldenummer: 79104952.1

(22) Anmeldetag: 05.12.79

(51) Int. Cl.³: **C 22 B 5/12**, C 21 B 13/14

(54) **Verfahren und Anlage zur Reduktion von Erzen.**

(30) Priorität: **07.12.78 DE 2852964**

(43) Veröffentlichungstag der Anmeldung:
**25.06.80 Patentblatt 80/13**

(45) Bekanntmachung des Hinweises auf die Patenterteilung:
**04.11.81 Patentblatt 81/44**

(84) Benannte Vertragsstaaten:
**AT BE DE FR GB IT**

(56) Entgegenhaltungen:
**DE-A-2 132 150**
**DE-A-2 133 860**
**DE-A1-2 428 715**
**DE-A1-2 601 196**
**DE-A1-2 625 223**
**DE-A1-2 655 813**
**DE-A1-2 659 213**
**DE-A1-2 735 020**
**DE-B-1 160 462**
**US-A-4 002 465**

(73) Patentinhaber: **Krupp Polysius AG,
Graf-Galen-Strasse 17, D-4720 Beckum (DE)**

(72) Erfinder: **Merz, Heinz-Emil, Waldstrasse 15,
D-4724 Wadersloh (DE)**
Erfinder: **Klonus, Jürgen, Kettelerstrasse 10,
D-4724 Wadersloh (DE)**

(74) Vertreter: **Tetzner, Volkmar, Dr.-Ing. Dr. Jur.,
Van-Gogh-Strasse 3, D-8000 München 71 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren und Anlage zur Reduktion von Erzen

Die Erfindung betrifft ein Verfahren zur Reduktion von Erzen unter Verwendung einer Trocknungs- und/oder Zerkleinerungseinrichtung, eines Schwebegas-Vorwärmers für die Vorwärmung, Kalzination und Vorreduktion der Erze, ferner eines Fertigreduktions-Ofens sowie einer Agglomeriereinrichtung, wobei Reduktionsmittel in eine zum Vorwärmer führende Ofenabgasleitung eingegeben werden. Die Erfindung befaßt sich ferner mit einer Anlage zur Durchführung dieses Verfahrens.

Es ist bereits bekannt (US-A-4 002 465), Erze, z. B. Eisen-, Nickel-, Chrom- und Manganerze, in stückiger Form in einem Drehrohrofen mit Hilfe eines festen Reduktionsmittels vorzuwärmen und vorzureduzieren, worauf diese vorreduzierten Erze dann anschließend in einem Elektro-Ofen zur Fertigreduktion eingegeben werden. Um einen störungsfreien Betrieb eines solchen Fertigreduktionsofen zu ermöglichen, muß der heiße Drehrohrofenaustrag einen hohen und gleichmäßigen Kalzinations- und Vorreduktionsgrad der Metalloxyde besitzen, ferner muß das Verhältnis zwischen festem Kohlenstoff und Metalloxyd in der Ofencharge möglichst konstant sein und die Ofencharge darf nur einen ganz geringen Feinanteil (Körnung kleiner als etwa 1 mm) enthalten, damit die Gasdurchlässigkeit der Charge im Ofen nicht beeinträchtigt wird.

In der Praxis kommt es außerdem in Anlagen, die einen Drehrohrofen und einen Elektro-Fertigreduktionsofen enthalten, aus verschiedenen Gründen zu unerwünschten Störungen. Wenn z. B. aufgrund einer Störung der Elektro-Fertigreduktionsofen nur mit verminderter Aufgabemenge beschickt werden kann, dann muß der vorgeschaltete Drehrohrofen vorübergehend mit kleinerer Austragsleistung arbeiten, was jedoch aufgrund seines verhältnismäßig trägen Verhaltens nur mit großer Verzögerung möglich ist; hierbei werden jedoch gleichzeitig erhöhte Mengen an Reduktionsmittel verbraucht, so daß die Ofencharge dann aufgrund des geänderten Reduktionsgrades auch ein geändertes Verhältnis zwischen festem Kohlenstoff und Metalloxyd aufweist. Letzteres bedingt jedoch wiederum eine Änderung im Betrieb des Fertigreduktionsofens, so daß derartige Störungen zu unerwünschten Betriebsschwankungen führen.

Ein weiterer Nachteil dieser bekannten Verfahren ist in den stark unterschiedlichen Körnungsgrößen zu sehen, die zu unterschiedlichen Reduktionsgraden und unterschiedlichen chemischen Zusammensetzungen einer dem Fertigreduktionsofen zuführenden Charge führen.

Ein Nachteil ist ferner auch darin zu sehen, daß die Ofencharge — wie bereits erwähnt, — nur einen möglichst kleinen Feinanteil von kleiner als 1 mm enthalten darf. Da viele Erze jedoch von Natur aus einen relativ großen Feinanteil besitzen, muß dieser entweder abgesiebt und auf Halde deponiert oder aber durch einen Agglomerier-Prozeß stückig gemacht und anschließend gehärtet werden, ehe er in den Drehrohrofen aufgegeben werden kann. Dies ist einerseits aufwendig, und andererseits läßt sich nicht immer vermeiden, daß bei der Vorreduktion im Drehrohrofen ein Teil der Pellets wieder zerfällt. Hierbei ist es dann im allgemeinen auch kaum möglich, die im Drehrohrofen und im Fertigreduktionsofen anfallenden Stäube weiter mit zu verwerten.

Es ist außerdem ein Verfahren bekannt (DE-A1-2 601 196), das insbesondere für die Reduktion und anschließende Agglomeration von feuchten Feinerzer bestimmt ist, Hierbei werden das feuchte Feinerz zunächst getrocknet und die dabei eventuell entstehenden Zusammenbackungen zerkleinert. Dieses vorgetrocknete Feinerz wird dann einem Schwebegas-Vorwärmer aufgegeben, in dem es vorgewärmt und vorreduziert wird. Das in diesem Vorwärmer vorreduzierte Erz gelangt dann unmittelbar in einen ersten Drehrohrofen, in dem es fertig reduziert wird, worauf dann das fertig reduzierte Feinerz in einen zweiten Drehrohrofen zwecks Pelletierung aufgegeben wird. Hierbei werden ferner die Abgase des ersten Drehrohrofens (Fertigreduktion) für die Trocknung der feuchten Feinerze und die Abgase des zweiten Drehrohrofens (Pelletierung) für die Vorwärmung und Vorreduktion der getrockneten Feinerze ausgenutzt.

Der Erfindung liegt die Aufgabe zugrunde, ein Verfahren der eingangs genannten Art (sowie eine zu dessen Durchführung geeignete Anlage) in der Weise zu schaffen, daß eine wirtschaftliche und gleichbleibende Reduktion sowohl von Feinerzen als auch von Stückerzen möglich und dabei eine gute Reguliermöglichkeit des Vorwärmers entsprechend den Erfordernissen des Fertigreduktionsofens gewährleistet ist.

Diese Aufgabe wird erfindungsgemäß dadurch gelöst, daß die vorreduzierten Erze nach Verlassen des Schwebegas-Vorwärmers heiß brikettiert und danach in einem Elektro-Ofen fertig reduziert werden, wobei wenigstens ein Teil der Elektro-Ofenabgase dem Schwebegas-Vorwärmer und die Vorwärmerabgase der Trocknungs- und/oder Zerkleinerungseinrichtung zugeleitet werden.

Bei dem erfindungsgemäßen Verfahren werden also zunächst die Roherze mit Hilfe der Vorwärmerabgase getrocknet und gegebenenfalls zerkleinert, so daß neben trockenen Erzen auch feuchte Erze und neben Feinerzen auch anfangs stückige Erze so vorbereitet werden können, daß sie in optimaler Weise in einem Schwebegas-Vorwärmer vorgewärmt, kalziniert und vorreduziert werden können. Die so vorreduzierten Erze werden dann unmittelbar anschließend heiß brikettiert, was den Vorteil hat, daß das Verhältnis von festem Kohlenstoff zu Metalloxyd konstant bleibt. Durch diese Brikettierung wird außerdem der im Vorwärmer erreichte Vorreduktionsgrad konstant gehalten. Auf diese Weise werden optimale Voraussetzungen für die Fertigreduktion der Erze in einem Elektroofen geschaffen, da die Erzbeschickung in jedem Falle sowohl chemisch als auch physikalisch stets gleich gehalten werden kann; es kommt noch hinzu, daß aufgrund der Brikettierung der Feinanteil der Elektro-Ofen-Beschickung mindestens auf ein vernachlässigbar kleines Ausmaß herabgedrückt werden kann (verglichen mit den eingangs geschilderten bekannten Ausführungen).

Die Verweilzeit der Erze im Schwebegas-Vorwärmer ist bekanntlich — dank intensiven Wärmeaustauschs — verhältnismäßig kurz (z. T. nur Sekunden), wodurch sich eine verhältnismäßig rasche Regulierungsmöglichkeit des Vorwärmers ergibt, so daß, falls beispielsweise eine Störung des Elektro-Ofens es erforderlich macht, die Wärmebehandlung in diesem Schwebegas-Vorwärmer schnell entsprechend geändert und angepaßt werden kann. Dies wiederum gewährleistet stets gleichbleibende Briketts aus vorreduzierten Erzen, selbst wenn im Fertig-Reduktionsofen Betriebsstörungen auftreten.

Da bei diesem erfindungsgemäßen Verfahren die Elektro-Ofenabgase für die Vorwärmung, Kalzination und Vorreduktion der Erze und die Vorwärmerabgase für die Trocknung feuchter Erze mit herangezogen werden, ergibt sich eine besonders große Wirtschaftlichkeit. Mit Hilfe dieses erfindungsgemäßen Verfahrens lassen sich außerdem auch solche Erztypen verarbeiten, die sonst während der Kalzination und Vorreduktion zerfallen.

Für die Vorreduktion der Erze hat es sich als besonders günstig erwiesen, wenn die Erze vor ihrer Aufgabe in den Schwebegas-Vorwärmer auf eine Feinheit von kleiner als etwa 1 mm zerkleinert werden.

Weiterhin ist es von Vorteil, wenn die Erze in dem Schwebegas-Vorwärmer bei einer Temperatur von zwischen 600 und 1000° C, vorzugsweise zwischen 700 und 900° C wärmebehandelt werden.

Gemäß einer vorteilhaften Ausgestaltung der Erfindung wird den Elektro-Ofen-Abgasen fein zerkleinerte, gasreiche Kohle als Reduktionsmittel zugegeben. Durch die Zugabe dieser Kohle in die Elektro-Ofen-Abgase kann der Kohlenstoffgehalt auch der fertig reduzierten Erze (also in den Briketts) rasch den jeweiligen Erfordernissen angepaßt werden. Hierbei wird dann eine besonders optimale Reduktion erreicht, wenn die den Elektro-Ofen-Abgasen zugegebene Kohle eine Körnung von kleiner als 3 mm, vorzugsweise jedoch kleiner als 1 mm, aufweist.

Die Fertigreduktion im Elektro-Ofen läßt sich weiterhin in vorteilhafter und kontrollierbarer Weise dadurch beeinflussen, daß den Elektro-Ofen-Abgasen gleichzeitig ein Überschußanteil an fein zerkleinerter Kohle für die Fertigreduktion in diesem Elektro-Ofen zugegeben wird.

Es kommt jedoch auch vielfach vor, daß neben gasreicher Kohle oder anstelle von gasreicher Kohle reaktionsarme Reduktionsmittel (z. B. Koks oder Anthrazit) verwendet werden sollen, weil diese überwiegend zur Verfügung stehen oder weil diese vor allem aus metallurgischen Gründen eingesetzt werden müssen. In solchen Fällen werden erfindungsgemäß die Erze dem Schwebegas-Vorwärmer gemeinsam mit dem reaktionsarmen Reduktionsmittel aufgegeben. Je nach den Gegebenheiten kann dann ein entsprechend abgestimmter Anteil gasreicher Feinkohle mit den Elektro-Ofen-Abgasen in den Vorwärmer eingeführt werden.

In jedem Falle wird man erfindungsgemäß jedoch so vorgehen, daß die vorreduzierten, heiß brikettierten Erze in heißem Zustand dem Elektro-Ofen für die Fertigreduktion zugeführt werden.

Eine Anlage zur Durchführung des erfindungsgemäßen Verfahrens enthält eine Trocknungs- und/oder Zerkleinerungseinrichtung, einen Schwebegas-Vorwärmer, einen Fertigreduktionsofen, eine Agglomeriereinrichtung und eine zum Schwebegas-Vorwärmer führende Ofenabgasleitung. Erfindungsgemäß ist diese Anlage dadurch gekennzeichnet, daß die Trocknungs- und/oder Zerkleinerungseinrichtung durch eine Fördereinrichtung mit dem als Zyklonvorwärmer ausgebildeten Schwebegas-Vorwärmer in Verbindung steht, daß dem Zyklonvorwärmer eine Heißbrikettiereinrichtung unmittelbar nachgeordnet ist, daß ferner für die Fertigreduktion der heiß brikettierten Erze ein Elektro-Ofen vorgesehen ist, dem wenigstens ein Beschickungsbunker vorgeschaltet ist, der mit der Heißbrikettiereinrichtung verbunden ist, daß weiterhin die Abgasleitung des Elektro-Ofens über einen Zwischenentstauber an den Zyklonvorwärmer angeschlossen ist, und daß die Abgasleitung des Zyklonvorwärmers an die Trocknungs- und/oder Zerkleinerungseinrichtung angeschlossen ist.

Generell kann für die Trocknung und/oder Zerkleinerung jeder geeignete Trockner bzw. jede geeignete Zerkleinerungseinrichtung verwendet werden.

Gemäß einer vorteilhaften Ausgestaltung der erfindungsgemäßen Anlage wird es in vielen Fällen vorgezogen, daß die Trocknungs- und/oder Zerkleinerungseinrichtung durch eine an sich bekannte Mahltrocknungseinrichtung gebildet wird. In einer solchen Einrichtung lassen sich verschiedene Erztypen sowie im Bedarfsfalle auch verschiedene Koks- bzw. Kohletypen in günstigster Weise zugleich trocknen und zerkleinern, wie es für die Weiterverarbeitung im Schwebegas-Vorwärmer erforderlich ist.

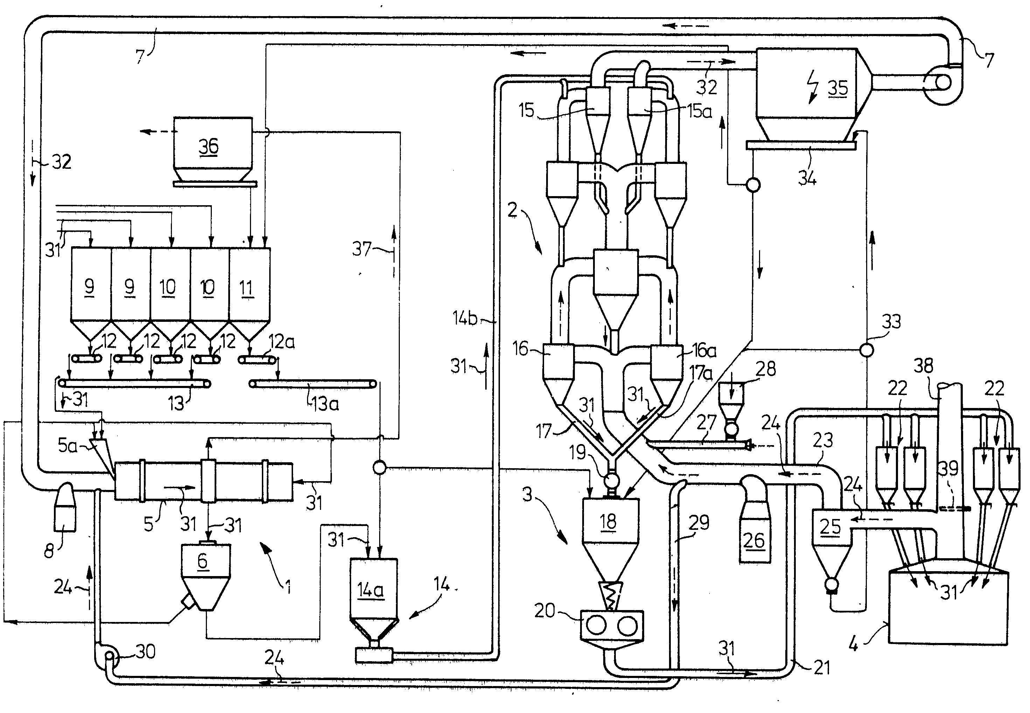

Die Erfindung sei im folgenden anhand eines in der Zeichnung veranschaulichten Ausführungsbeispiels näher beschrieben.

Die Zeichnung zeigt eine ganz schematisch gehaltene Gesamtansicht einer zur Durchführung des erfindungsgemäßen Verfahrens geeigneten Anlage.

Die Anlage dieses Ausführungsbeispiels enthält eine als Trocknungs- und Zerkleinerungseinrichtung dienende Mahltrocknungseinrichtung 1, einen als Zyklonvorwärmer 2 ausgebildeten Schwebegas-Wärmetauscher, eine unmittelbar dem Zyklonvorwärmer 2 nachgeschaltete Heißbrikettiereinrichtung 3 sowie einen zur Fertigreduktion der vorreduzierten und brikettierten Erze dienenden Elektro-Ofen 4.

Die Mahltrocknungseinrichtung kann in üblicher Weise im wesentlichen durch eine Rohrmühle 5 und einen Windsichter 6 gebildet sein, wobei in die Rohrmühle 5 die noch heißen, gereinigten Abgase des Zyklonvorwärmers 2 über eine Leitung 7 eingeführt werden, die im Bedarfsfalle noch mit Hilfe einer Brennerkammer 8 weiter aufgeheizt werden können. Der Mahltrocknungseinrichtung 1 sind mehrere Erz-Vorratsbunker 9, Kohle- bzw. Koks-Vorratsbunker 10 sowie wenigstens ein Vorratsbunker 11 für Filterstäbe oder dgl. vorgeschaltet. Unter den Ausläufen dieser Vorratsbunker 9 bis 11 sind zweckmäßig Dosierfördervorrichtungen 12 (z. B. in Form von Förderbandwagen) angeordnet, die auf wenigstens einen Sammelförderer arbeiten, der mit einem Aufgabetrichter 5a der Rohrmühle 5 in Verbindung steht.

Zwischen der Mahltrocknungseinrichtung 1 und dem Zyklonvorwärmer 2 ist eine Fördereinrichtung, vorzugsweise ein pneumatischer Senkrechtförderer 14 vorgesehen, in dessen Vorratsbehälter 14a die genügend getrockneten und zerkleinerten Erze aufgenommen werden; dieser Behälter 14a steht dann über die senkrechte Förderleitung 14b mit den obersten Zyklonen 15, 15a des Zyklon-Vorwärmers 2 in Verbindung.

Wie sich in der Zeichnung erkennen läßt, kann die Dosierfördervorrichtung 12a des Staubbehälters 11 über einen Sammelförderer 13a ebenfalls direkt mit dem Behälter 14a des Senkrechtförderers 14 oder mit der Heißbrikettiereinrichtung 3 verbunden sein.

Der Zyklonvorwärmer 2 kann in üblicher Weise durch mehrere übereinander angeordnete und durch Gut- und Gasleitungen miteinander verbundene Zyklonstufen (in diesem Falle vier Zyklonstufen) gebildet sein. Die unterste Zyklonstufe dieses Zyklonvorwärmers 2, die durch die beiden Zyklone 16, 16a gebildet wird, steht über ihre Gutaustragsleitungen 17, 17a mit dem Vorratsbehälter 18 der Heißbrikettiereinrichtung 3 in Verbindung (ggf. unter Zwischenschaltung eines Schleusenorgans 19). Der eigentliche Brikettierteil 20 der Heißbrikettiereinrichtung 3 steht entweder über eine Förderleitung 21 (wie hier der Einfachheit halber angedeutet) oder auch — was aus baulichen Gründen meist bevorzugt wird — über irgendeinen geeigneten mechanischen Heißgutförderer mit einer Anzahl von Beschickungsbunkern 22 in direkter Verbindung, wobei diese Beschickungsbunker unmittelbar über dem Elektro-Ofen 4 für die Fertigreduktion der Erze angeordnet sind.

Der Elektro-Ofen 4 steht mit dem Zyklonvorwärmer 2 bzw. mit dessen Zyklonen 16, 16a über eine Ofenabgasleitung 23 in Verbindung. In diese Ofenabgasleitung 23 ist zunächst — in Strömungsrichtung der Elektro-Ofen-Abgase (vgl. gestrichelte Pfeile 24) gesehen — ein Zwischenentstauber in Form eines Heißgaszyklons 25 eingeschaltet. An den zwischen dem Heißgaszyklon 25 und dem Vorwärmer 2 befindlichen Abschnitt der Abgasleitung 23 ist dann ferner eine Zusatzbrennkammer 26 angeschlossen, während im Bereich zwischen dieser Zusatzbrennkammer 26 und dem Vorwärmer 2 noch eine Zuführleitung 27 für Feinkohle einmündet. Diese Feinkohle-Zuführleitung 27 ist mit einer nicht näher dargestellten Druckluftquelle sowie mit einem Vorratsbehälter 28 für Feinkohle verbunden.

Ferner läßt sich erkennen, daß von der Elektro-Ofen-Abgasleitung 23 — vorzugsweise im Bereich zwischen der Zusatzbrennkammer 26 und der Einmündung der Zuführleitung 27 — eine Abzweigleitung 29 abgezweigt ist, die über ein Gebläse 30 an die in die Rohrmühle 5 einmündende Gasleitung 7 angeschlossen ist.

Die Funktion dieser zuvor beschriebenen und in der Zeichnung veranschaulichten Anlage ist folgendermaßen:

Es sei zunächst vorausgeschickt, daß der Weg der Erze durch durchgehende Pfeile 31, der Weg der Elektro-Ofen-Abgase durch die bereits erwähnten gestrichelten Pfeile 24 und der Weg der Vorwärmerabgase durch gestrichelte Pfeile 12 angegeben ist.

Die zu trocknenden und zu zerkleinernden Erze werden von den Vorratsbunkern 9 dosiert der Mahltrocknungseinrichtung 1, d. h. zunächst der Rohrmühle 5, zugeführt. Gleichzeitig kann im Bedarfsfalle auch ein entsprechend abgemessener Anteil an reaktionsarmen Reduktionsmitteln aus den Kohle- bzw. Koksbunkern 10 zusammen mit den Erzen in die Rohrmühle 5 eingegeben werden. In der Mahltrocknungseinrichtung 1 werden die aufgegebenen Materialien auf eine Feinheit von kleiner als 1 mm zerkleinert und dabei gleichzeitig mit den Abgasen (Pfeile 32) des Vorwärmers 2 getrocknet, wobei außerdem im Bedarfsfalle noch eine Aufheizung dieser Abgase durch die Brennkammer 8 erfolgen kann; ggf. kann auch noch ein Anteil der Elektro-Ofen-Abgase über die Abzweigleitung 29 herangeführt werden. Die genügend zerkleinerten und getrockneten Erze (Pfeile 31) gelangen dann in den Behälter 14a des pneumatischen Senkrechtförderers 14 und werden anschließend über die Förderleitung 14b in die oberste Zyklonstufe (Zyklone 15, 15a) des Zyklonvorwärmers 2 aufgegeben. In diesem Zyklonvorwärmer 2 werden die Feinerze dann mit Hilfe der vom Elektro-Ofen 4 über die Abgasleitung 23 herangeführten Abgase (Pfeile 24) vorgewärmt, kalziniert und vorreduziert. Die Behandlung im Zyklonvorwärmer 2 erfolgt bei einer Temperatur von etwa 600 bis 1000° C, vorzugsweise bei einer Temperatur von 700 bis 900° C. Zu diesem Zweck können die Elektro-Ofen-Abgase mit Hilfe der Zusatz-Brennkammer 26 noch in gewünschter Weise aufgeheizt werden. Nach diesem Aufheizen kann in die Elektro-Ofen-Abgasleitung 23 ein entsprechend großer Anteil gasreicher Kohle über die Zuführleitung 27 eingeblasen werden, wobei diese Kohle eine Körnung von kleiner als 3 mm, vorzugsweise kleiner als 1 mm, besitzen sollte. Diese als festes Reduktionsmittel verwendete Kohle wird vorzugsweise mit einem Überschußanteil in die Ofenabgasleitung 23 eingeblasen, so daß dieser Überschußanteil an gasreicher Kohle mit den vorreduzierten Erzen in den Elektro-Ofen 4 gelangen kann.

Über die Gutleitungen 17, 17a der untersten Zyklonstufe (Zyklone 16, 16a) des Zyklonvorwärmers 2 gelangen die vorreduzierten Erze in die Heißbrikettiereinrichtung 3. Die so hergestellten Erzbriketts werden dann im heißen Zustand in die Beschickungsbunker 22 über dem Elektro-Ofen 4 gefördert und können von dort in den Elektro-Ofen 4 chargiert werden.

Die den Elektro-Ofen 4 verlassenden heißen Abgase, die zum Zyklonvorwärmer 2 geleitet werden sollen, werden in dem Heißgaszyklon 25 zwischenentstaubt. Der dabei anfallende Staub kann entweder direkt der Heißbrikettiereinrichtung 3 oder über eine Leitung 33 einem Sammelförderer 34 zugeleitet werden, der unter einem Elektrofilter 35 angeordnet ist, in dem die Abgase des Zyklonvorwärmers 2 entstaubt werden. Von dem Sammelförderer 34 kann der Staub dann entweder ebenfalls der Heißbrikettiereinrichtung 3 oder dem Staubbunker 11 vor der Mahltrocknungseinrichtung 1 zugeführt werden. In diesem Staubbunker 11 wird außerdem noch der Staub gesammelt, der in einem Filter 36 abgeschieden wird, durch den die Abgase (gestrichelter Pfeil 37) der Mahltrocknungseinrichtung 1 hindurchgeleitet werden.

Es sei schließlich noch darauf hingewiesen, daß — wie aus der Zeichnung ersichtlich — der Elektro-Ofen 4 mit einem Notkamin 38 und einem darin angeordneten Notschieber 39 in üblicher Weise ausgestattet ist.

**Patentansprüche**

1. Verfahren zur Reduktion von Erzen unter Verwendung einer Trocknungs- und/oder Zerkleinerungseinrichtung, eines Schwebegas-Vorwärmers für die Vorwärmung, Kalzination und Vorreduktion der Erze, ferner eines Fertigreduktionsofens sowie einer Agglomeriereinrichtung, wobei Reduktionsmittel in eine zum Vorwärmer führende Ofenabgasleitung eingegeben werden, dadurch gekennzeichnet, daß die vorreduzierten Erze nach Verlassen des Schwebegas-Vorwärmers heißbrikettiert und danach in einem Elektro-Ofen fertig reduziert werden, wobei wenigstens ein Teil der Elektro-Ofen-Abgase dem Schwebegas-Vorwärmer und die Vorwärmerabgase der Trocknungs- und/oder Zerkleinerungseinrichtung zugeleitet werden.

2. Verfahren nach Anspruch 1, dadurch gekennzeichnet, daß die Erze vor ihrer Aufgabe in den Schwebegas-Vorwärmer auf eine Feinheit von kleiner als 1 mm zerkleinert werden.

3. Verfahren nach Anspruch 1, dadurch gekennzeichnet, daß die Erze in dem Schwebegas-Vorwärmer bei einer Temperatur zwischen 600 und 1000° C, vorzugsweise zwischen 700 und 900° C, wärmebehandelt werden.

4. Verfahren nach den Ansprüchen 1 und 3, dadurch gekennzeichnet, daß den Elektro-Ofen-Abgasen fein zerkleinerte, gasreiche Kohle als Reduktionsmittel zugegeben wird.

5. Verfahren nach Anspruch 4, dadurch gekennzeichnet, daß die den Elektro-Ofen-Abgasen zugegebene Kohle eine Körnung von kleiner als 3 mm, vorzugsweise kleiner als 1 mm, aufweist.

6. Verfahren nach den Ansprüchen 4 und 5, dadurch gekennzeichnet, daß den Elektro-Ofen-Abgasen gleichzeitig ein Überschußanteil an fein zerkleinerter Kohle für die Fertigreduktion im Elektro-Ofen zugegeben wird.

7. Verfahren nach den Ansprüchen 1 und 3, dadurch gekennzeichnet, daß die Erze dem Schwebegas-Vorwärmer gemeinsam mit reaktionsarmen Reduktionsmitteln aufgegeben werden.

8. Verfahren nach wenigstens einem der vorhergehenden Ansprüche, dadurch gekennzeichnet, daß die Elektro-Ofen-Abgase vor der Zugabe der Feinkohle einer Zwischenentstaubung unterworfen werden.

9. Verfahren nach Anspruch 8, dadurch gekennzeichnet, daß der in der Zwischenentstaubung anfallende Staub der Heißbrikettierung zugeführt wird.

10. Verfahren nach wenigstens einem der vorhergehenden Ansprüche, dadurch gekennzeichnet, daß die den Schwebegas-Vorwärmer verlassenden Abgase in einem Filter vom Staub befreit werden und der hier anfallende Staub entweder zusammen mit den getrockneten Feinerzen erneut in den Vorwärmer eingeführt oder zusammen mit den vorreduzierten Erzen heißbrikettiert wird.

11. Verfahren nach Anspruch 8, dadurch gekennzeichnet, daß zwischen der Zwischenentstaubung und der Einführung der Elektro-Ofen-Abgase in den Schwebegas-Vorwärmer eine zusätzliche Aufheizung dieser Ofenabgase erfolgt.

12. Verfahren nach wenigstens einem der vorhergehenden Ansprüche, dadurch gekennzeichnet, daß die vorreduzierten, heißbrikettierten Erze in heißem Zustand dem Elektro-Ofen zugeführt werden.

13. Anlage zur Durchführung des Verfahrens nach wenigstens einem der Ansprüche 1 bis 12, enthaltend eine Trocknungs- und/oder Zerkleinerungseinrichtung, einen Schwebegas-Vorwärmer, einen Fertigreduktionsofen, eine Agglomeriereinrichtung und eine zum Vorwärmer führende Abgasleitung, dadurch gekennzeichnet, daß die Trocknungs- und/oder Zerkleinerungseinrichtung (1) durch eine Fördereinrichtung (14) mit dem als Zyklonvorwärmer (2) ausgebildeten Schwebegas-Vorwärmer in Verbindung steht, daß dem Zyklonvorwärmer eine Heißbrikettiereinrichtung (3) unmittelbar nachgeordnet ist, daß ferner für die Fertigreduktion der heißbrikettierten Erze ein Elektro-Ofen (4) vorgesehen ist, dem wenigstens ein Beschickungsbunker (22) vorgeschaltet ist, der mit der Heißbrikettiereinrichtung verbunden ist, daß weiterhin die Abgasleitung (23) des Elektro-Ofens über einen Zwischenentstauber (25) an den Zyklonvorwärmer angeschlossen ist und daß die Abgasleitung (7) des Zyklonvorwärmers (2) an die Trocknungs- und/oder Zerkleinerungseinrichtung (1) angeschlossen ist.

## Claims

1. Method of reducing ores using a drying and/or comminuting apparatus, a suspension gas preheater for the preheating, calcination and prereduction of the ores, furthermore a complete reduction furnace and an agglomeration means, reducing agents being introduced into a furnace exhaust gas conduit leading to the preheater, characterised in that the prereduced ores after leaving the suspension gas preheater are hot briqueted and thereafter completely reduced in an electric furnace, at least a protion of the electric furnace exhaust gases being supplied to the suspension gas preheater and the preheater exhaust gases being supplied to the drying and/or comminuting apparatus.

2. Method according to claim 1, characterised in that the ores before being introduced into the suspension gas preheater are comminuted to a fineness of less than 1 mm.

3. Method according to claim 1, characterised in that the ores are heat treated in the suspension gas preheater at a temperature between 600 and 1000°C, preferably between 700 and 900°C.

4. Method according to claims 2 and 3, characterised in that the finely comminuted gas-rich carbon is added as reducing agent to the electric furnace exhaust gases.

5. Method according to claim 4, characterised in that the carbon added to the electric furnace exhaust gases has a granulation of less than 3 mm, preferably less than 1 mm.

6. Method according to claims 4 and 5, characterised in that an excess proportion of finely comminuted carbon for the complete reduction in the electric furnace is added to the electric furnace exhaust gases.

7. Method according to claims 1 and 3, characterised in that the ores are introduced into the suspension gas preheater jointly with low-reaction reducing agents.

8. Method according to at least one of the preceding claims, characterised in that the electric furnace exhaust gases are subjected to an intermediate dedusting prior to the addition of the fine carbon.

9. Method according to claim 8, characterised in that the dust accumulating in the intermediate dedusting is supplied to the hot briqueting.

10. Method according to at least one of the preceding claims, characterised in that the exhaust gases leaving the suspension gas preheater are freed from dust in a filter and the dust accumulating there is either again introduced into the preheater together with the dried fine ores or hot-briqueted together with the prereduced ores.

11. Method according to claim 8, characterised in that between the intermediate dedusting and the introduction of the electric furnace exhaust gases into the suspension gas preheater an additional heating of said furnace exhaus gases takes place.

12. Method according to at least one of the preceding claims, characterised in that the prereduced hot-briqueted ores are supplied in the hot condition to the electric furnace.

13. Plant for carrying out the method according to at least one of claims 1 to 12, including a drying and/or comminuting apparatus, a suspension gas preheater, a complete reduction furnace, an agglomerating means and an exhaust gas conduit leading to the preheater, characterised in that the drying and/or comminuting apparatus (1) is connected by a conveying means (14) to the suspension gas preheater constructed as cyclone preheater (2), that the cyclone preheater is followed immediately by a hot-briquetting means (3), that furthermore for the complete reduction of the hot-briquetted ores an electric furnace (4) is provided which is preceded by at least charging bunker (22) which is connected to the hot-briquetting means, that also the exhaust gas conduit (23) of the electric furnace is connected via an intermediate deduster (25) to the cyclone preheater and that the exhaust gas conduit (7) of the cyclone preheater (2) is connected to the drying and/or comminuting apparatus (1).

## Revendications

1. Procédé de réduction de minerais à l'aide d'un dispositif de séchage et/ou de fractionnement, d'un réchauffeur par mise en suspension dans les gaz dans lequel ont également lieu la calcination et la réduction préliminaire des minerais, d'un four d'achèvement de la réduction ainsi que d'un dispositif d'agglomération, des agents de réduction étant déversés dans une canalisation par laquelle les gaz évacués du four sont dirigés sur le réchauffeur, procédé caractérisé en ce qu'il consiste essentiellement à mettre à chaud sous forme de briquettes ou de boulets les minerais ayant subi la réduction préliminaire et ayant quitté le réchauffeur par mise en suspension dans les gaz, puis à en achever la réduction dans un four électrique, au moins une partie des gaz évacués du four électrique étant dirigée sur le réchauffeur par mise en suspension dans les gaz et les gaz évacués du réchauffeur étant dirigés sur le dispositif de séchage et/ou de fractionnement.

2. Procédé selon la revendication 1, caractérisé en ce que les minerais subissent un fractionnement à une finesse inférieure à 1 mm avant leur introduction dans le réchauffeur par mise en suspension dans les gaz.

3. Procédé selon la revendication 1, caractérisé en ce que les minerais subissent le traitement thermique dans le réchauffeur par mise en suspension dans les gaz à une température comprise entre 600 et 1000°C, de préférence entre 700 et 900°C.

4. Procédé selon les revendications 1 et 3, caractérisé en ce que les gaz évacués du four électrique sont additionnés de charbon finement broyé, riche en gaz, utilisé en agent de réduction.

5. Procédé selon la revendication 4, caractérisé en ce que le charbon additionné aux gaz évacués du four électrique a une granulométrie inférieure à 3 mm, de préférence inférieure à 1 mm.

6. Procédé selon les revendications 4 et 5, caractérisé en ce que les gaz dégagés dans le four électrique sont également additionnés d'un excès de charbon finement broyé pour l'achèvement de la réduction dans le four électrique.

7. Procédé selon les revendiactions 1 et 3, caractérisé en ce que les minerais sont introduits dans le réchauffeur par mise en suspension dans les gaz simultanément avec des agents de réduction faiblement réactionnels.

8. Procédé selon au moins l'une des revendications précédentes, caractérisé en ce que les gaz évacués du four électrique sont soumis à un dépoussiérage intermédiaire avant addition des fines de charbon.

9. Procédé selon la revendication 8, caractérisé en ce que la poussière provenant du dépoussiérage intermédiaire est envoyée à la mise à chaud en forme de briquettes ou de boulets.

10. Procédé selon au moins l'une des revendications précédentes, caractérisé en ce que les gaz quittant le réchauffeur par mise en suspension dans les gaz sont débarrassés de la poussière dans un filtre et la poussière ainsi recueillie est soit réintroduite dans le réchauffeur avec les fines de minerai séchées, soit mise à chaud en forme de briquettes ou de boulets avec les minerais ayant subi la réduction préliminaire.

11. Procédé selon la revendication 8, caractérisé en ce que les gaz évacués du four électrique subissent un chauffage complémentaire entre le dépoussiérage intermédiaire et leur introduction dans le réchauffeur par mise en suspension dans les gaz.

12. Procédé selon au moins une des revendications précédentes, caractérisé en ce que les minerais ayant subi la réduction préliminaire et mis à chaud en forme de briquettes ou de boulets sont introduits à l'état chaud dans le four électrique.

13. Installation pour la mise en oeuvre du procédé selon au moins l'une des revendications 1 à 12, comprenant un dispositif de séchage et/ou de fractionnement, un réchauffeur par mise en suspension dans les gaz, un four d'achèvement de la réduction, un dispositif d'agglomération et une canalisation dirigeant les gaz évacués dans le réchauffeur, caractérisé en ce que le dispositif (1) de séchage et/ou de fractionnement communique par un dispositif de transport (14) avec le réchauffeur par mise en suspension dans les gaz qui est conformé en réchauffeur à cyclones (2), un dispositif (3) de mise à chaud en forme de briquettes ou de boulets est disposé immédiatement en aval du réchauffeur à cyclones, par ailleurs un four électrique (4) en amont duquel se trouve au moins une trémie de chargement (22) qui communique avec le dispositif de mise à chaud en forme de briquettes ou de boulets est prévu pour l'achèvement de la réduction des minerais mis à chaud en forme de briquettes ou de boulets, de plus la canalisation (23) des gaz évacués du four électrique est raccordée par un dépoussiéreur intermédiaire (25) au réchauffeur à cyclones et la canalisation (7) des gaz évacués du réchauffeur à cyclones (2) est raccordée au dispositif (1) de séchage et/ou de fractionnement.